# EUROPEAN PATENT APPLICATION

(11) **EP 3 629 528 A1**
(43) Date of publication of application: **01.04.2020**
(21) Application number: 18306239.7
(22) Date of filing: 25.09.2018
(51) Int. Cl.: H04L 12/701

(54) **METHOD AND APPARATUS FOR FORWARDING PACKETS FROM A FIRST NETWORK TO A SECOND NETWORK**

(71) Applicant: InterDigital CE Patent Holdings, 75017 Paris (FR)
(72) Inventor: MONSIFROT, Antoine, 35576 Cesson-Sévigné Cedex (FR); GOUACHE, Stéphane, 35576 Cesson-Sévigné Cedex (FR); LE SCOUARNEC, Nicolas, 35576 Cesson-Sévigné Cedex (FR)
(74) Representative: Huchet, Anne

(57) **Abstract**

In order to reduce the page load time for web-browsing applications, a salient idea is to anticipate, in a gateway, the opening of secondary connections to secondary destinations according to connection-oriented protocols, upon reception of a connection request control packet for opening a main connection to a main destination, wherein the secondary destinations are associated with the main destination. The main destination for example corresponds to an IP address and/or a host name of the host from which the first resource of a web page is delivered, and the secondary destinations associated with that main destination correspond to the addresses of the other hosts from which sub resources (i.e. all the other resources of the same web page) are delivered. The associations between the secondary destinations and the main destination are pre-existing (stored) in the gateway.

## Description

### 1. TECHNICAL FIELD

The present disclosure relates to the networking domain, particularly to network latency involved in loading a web page.

### 2. BACKGROUND ART

When a web browser application loads a web page, it has to parse the page code to retrieve links to any sub resources (images, scripts, style sheets, etc.). Then, for loading each sub resource, many protocols are needed such as for example the Domain Name System (DNS) resolution, the Transport Control Protocol (TCP) and often the Secure Socket Layer (SSL) negotiation which generally cumulate their own latencies. While high-speed network access is commonplace for many users, page load time for web pages including many resources may remain significantly high. The present disclosure has been designed with the foregoing in mind.

### 3. SUMMARY

According to a first aspect, there is provided an apparatus comprising:
- a first network interface for connecting to a first network;
- a second network interface for connecting to a second network;
- means for storing an association of a secondary destination with a main destination;
- means for opening a secondary connection to the secondary destination according to a communication protocol on the second network based on the stored association, said opening the secondary connection being triggered by a reception of a connection request packet from the first network for opening a main connection to the main destination according to the communication protocol;
- means for forwarding, on the opened secondary connection on the second network, subsequent data packets received from the first network and directed to the secondary destination.

According to a second aspect, there is provided a method for forwarding packets from a first network to a second network, the method comprising:
- opening a secondary connection to a secondary destination according to a communication protocol on the second network, the secondary destination being associated with a main destination, said opening the secondary connection being triggered by a reception of a connection request packet from the first network for opening a main connection to the main destination according to the communication protocol;
- forwarding, on the opened secondary connection on the second network, subsequent data packets received from the first network and directed to the secondary destination.

### 4. BRIEF DESCRIPTION OF THE DRAWINGS

- **Figure 1A** illustrates a system overview involving an apparatus G according to a specific and non-limiting embodiment of the disclosed principles;
- **Figure 1B** illustrates an exemplary data packet exchange according to a connection-oriented protocol;
- **Figure 2** depicts an example of a method for forwarding packets from a first network to a second network according to a specific and non-limiting embodiment of the disclosed principles;
- **Figure 3A** illustrates an exemplary packet exchange according to a connection-oriented protocol and according to a specific and non-limiting embodiment of the disclosed principles;
- **Figure 3B** illustrates an exemplary packet exchange according to a connection-oriented protocol and according to another specific and non-limiting embodiment of the disclosed principles;
- **Figure 4A** illustrates a processing device for forwarding packets between a first network and a second network according to a specific and non-limiting embodiment of the disclosed principles;
- **Figure 4B** represents an exemplary architecture of the processing device of figure 4A according to a specific and non-limiting embodiment of the disclosed principles.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the term " interconnected " is defined to mean directly connected to or indirectly connected with through one or more intermediate components. Such intermediate components may include both hardware and software based components. The term "interconnected" is not limited to a wired interconnection and also includes wireless interconnection.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Generally speaking, packets represent any set of data being transmitted from a first device to a second device using any kind of networking protocol. For the sake of clarity and without loss of generality, the present principles will be described with the Internet Protocol (IP) as a networking protocol, but the disclosed principles are applicable to any other kind of protocol adapted to route packets from a first device to a second device by transiting over various networking devices.

The present disclosure addresses issues related to a networking apparatus forwarding packets of data between at least two networks using a large variety of protocols. A connection-oriented protocol is a protocol where a connection is established before any useful data can be transferred. The alternative is a connection-less protocol where there is not such preliminary connection establishment and where any packet is routed independently from each other. A connection-oriented protocol comprises two types of packets: control packets which purpose is to establish the connection and data packets which purpose is to transfer useful data over a connection.

Throughout the disclosure, the term destination refers to a logical endpoint within a given device to which a given packet is destined. Depending on the protocol the destination may take various different forms, but at least contains a network address of a given device in a network. Depending on the protocol, the destination may in addition comprise an identifier of an endpoint to which a packet is destined within the given device.

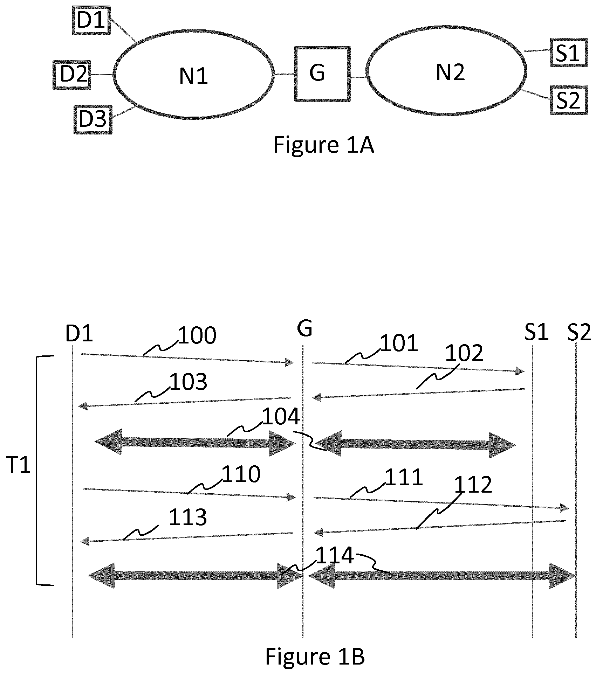

**Figure 1A** illustrates a system overview involving an apparatus G according to a specific and non-limiting embodiment of the disclosed principles. The apparatus G comprises a first network interface (not shown) for connecting to a first network N1, and a second network interface (not shown) for connecting to a second network N2. A first plurality of devices D1, D2, D3 connected to the first network N1 communicate with a second plurality of devices S1, S2 connected to the second network N2 by exchanging packets over both networks N1, N2 via the apparatus G. In other words, the apparatus G, by forwarding packets between the first and the second networks, allows the devices D1, D2 and D3 to communicate with the devices S1, S2. For the sake of clarity and without loss of generality, the first network N1 is a home network (e.g., a Local Area Network or LAN), the second network N2 is the Internet (e.g., a WAN or Wide Area Network) and the apparatus G is a gateway interconnecting devices D1, D2, D3 of the home network with Internet servers S1, S2, but any type of networking apparatus G allowing a first plurality of devices D1, D2, D3 connected to a first network N1 of any type to communicate with a second plurality of devices S1, S2 of any type, connected to a second network N2 of any type, is compatible with the disclosed principles.

Opening a connection by a device D1, D2, D3 (connected to the first network) towards a server S1, S2 (connected to the second network) according to a connection oriented protocol, may result in a first connection on the first network N1 between the device D1, D2, D3 and the gateway G and a second connection on the second network N2 between the gateway G and the server S1, S2, the gateway G forwarding packets between the first and the second connections so that the device D1, D2, D3 and the server S1, S2 can communicate. For the sake of clarity, the disclosed principles will be described by mentioning a connection between the device and the server despite two different connections may be used in practice on respectively the first network and the second network via the gateway G.

Considering an exemplary situation where the device D1 runs a web browser application for parsing a web pages, a user of the device D1 may be easily annoyed if the page load time is too long (e.g., more than several seconds). The page load time represents (includes) the time needed for downloading and displaying the entire content of the web page. The page load time is impacted by several factors, including contention for available throughput in the networks interconnecting the device and the various servers hosting the resources of the web page, as well as various protocol latencies. In average, a web page of one Mega Byte is composed of eighty-eight resources such as images, scripts (e.g., JavaScript) and Cascading Style Sheets (CSS), which are to be obtained from fifteen different servers. For each resource a DNS resolution, a TCP connection handshake and an SSL negotiation are generally necessary, resulting in cumulating the latencies of the various cascaded protocols.

**Figure 1B** illustrates an exemplary packet exchange according to a connection-oriented protocol for downloading resources hosted by different servers. For the purpose of illustration, it is considered that a web page containing links to two resources which are hosted by two servers S1, S2 is parsed by a browser application hosted by the device D1. However as mentioned above web pages generally contain links to many more resources, hosted by many more servers. The browser parses the web page, and for downloading the first resource, the device D1 starts by sending a connection request control packet 100 directed to the first server S1 via the first network N1, which is received and forwarded by the gateway G to the server S1 via the second network N2 as a forwarded connection request control packet 101. The server S1 sends back a response control packet 102 directed to the device D1 via the second network N2 which is received and forwarded back by the gateway G to the device D1 via the first network N1 as a forwarded response control packet 103. Depending on the type of protocol, more control packet exchanges (not represented) may be necessary to open the first connection. Once the first connection is open on both the first N1 and the second N2 networks, a flow of data packets 104 (carrying useful data) are exchanged over the open first connections for downloading the first resource. Considering that, for illustrative purposes and without limitation, the connection-oriented protocol is TCP, the connection request 100 is a TCP SYN packet, the response 102 is a TCP SYN-ACK packet. A TCP ACK (not represented) is further sent by the device D1 to the server S1 as the final hand shake control packet for opening the TCP connection. If the first resource is protected by SSL, an SSL connection is further negotiated (not represented). Once the TCP connection (and/or the SSL connection) is open, a resource (an image, a JavaScript, a CSS) is downloaded from the server S1 by the device D1 on the open connection 104.

As the browser further parses the web page, the second resource, hosted by a second server S2 is then downloaded by the device D1 similarly as the first resource by sending a further connection request control packet 110 directed to the second server S2 via the first network N1, which is received and forwarded by the gateway G to the second server S2 via the second network N2 as a forwarded further connection request control packet 111. The second server S2 sends back a further response control packet 112 directed to the device D1 via the second network N2 which is received and forwarded back by the gateway G to the device D1 via the first network N1 as a forwarded further response control packet 113. Once a second connection is open on both the first N1 and the second N2 networks (illustrated by two different arrays), a flow of data packets 114 are exchanged over the gateway G via the open second connection for downloading the second resource. However, as illustrated in Figure 1B, opening the second connections for downloading the second resource takes place after opening the first connections for the downloading the first resource, therefore adversely impacting the page load time T1.

A possible solution for improving the page load time could be to start downloading the resources of a web page before the parsing completes, for example by adding a cache in the browser, where the resources associated with a web page would be recorded, this however implies a first parsing and is limited to the device running the browser. If three members of a same family access a same web page with three different devices D1, D2, D3, each time the web page must be parsed each time before the start of the connections to obtain the resources. Moreover, if the page is updated it is not possible to update the cache without a new web page parsing.

A salient idea is to anticipate, in the gateway, the opening of secondary connections to secondary destinations according to connection-oriented protocols, upon reception of a connection request control packet for opening a main connection to a main destination, wherein the secondary destinations are associated with the main destination. The main destination for example corresponds to an IP address and/or a host name of the host from which the first resource of a web page is delivered, and the secondary destinations associated with that main destination correspond to the addresses of the other hosts from which sub resources (i.e. all the other resources of the same web page) are delivered. The associations between the secondary destinations and the main destination are pre-existing (stored) in the gateway. In a first variant they are learned by the gateway, based on monitoring, by the gateway, of connection request control packets received from the first network and directed to various destinations of the second network. In a second variant, these associations are downloaded from a server. Any technique for storing in the gateway associations of secondary destinations with a main destination for triggering opening connections to secondary destinations upon a reception of a connection request directed to the main destination is compatible with the disclosed principles. Anticipating opening connections directed to secondary destinations by the gateway, on behalf of the device D1 allows to reduce the protocol latency required for opening all the secondary connections one after each other as the web page is parsed by a device connected to the gateway. Indeed, when the device D1 will attempt to retrieve data from secondary connections, it will benefit from the fact that the secondary connections have been already opened by the gateway on the second network N2. Moreover, the protocol latency is reduced for any device connected to the gateway and parsing the same web page.

For the sake of clarity the disclosed principles will be described through the illustrative example of devices connected to a home network, and browsing a web page pointing to resources delivered from a variety of web servers via a home gateway, but the disclosed principles are not limited to the browsing of web pages and any device accessing a variety of resources from remote devices interconnected via a gateway and using connection-oriented protocols are compatible with the disclosed principles.

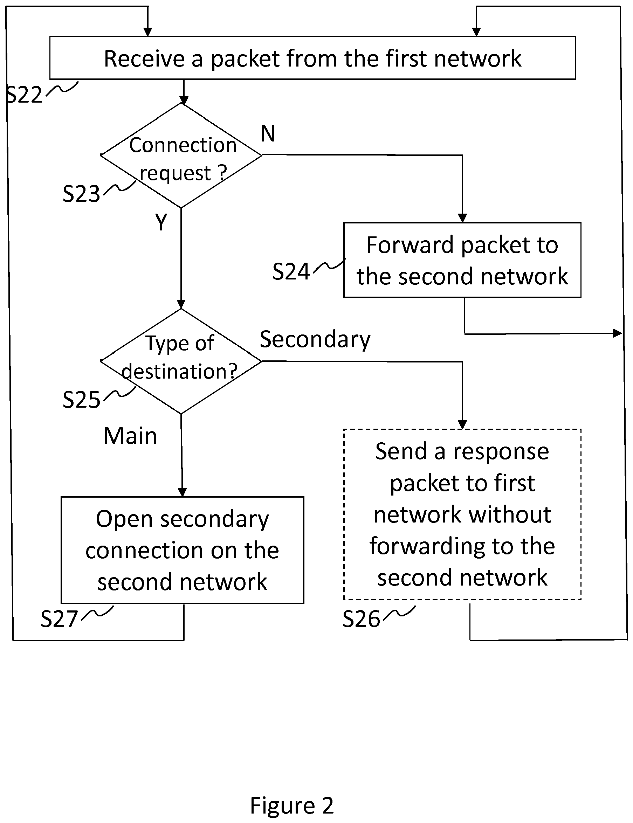

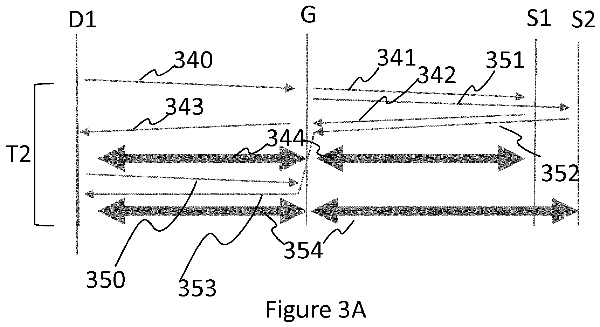

**Figure 2** depicts an example of a method for forwarding packets from a first network N1 to a second network N2 according to a specific and non-limiting embodiment of the disclosed principles. **Figure 2** is described together with **Figure 3A** illustrating an exemplary packet exchange according to a connection-oriented protocol and according to a specific and non-limiting embodiment of the disclosed principles.

The gateway comprises at least an association of a secondary destination with a main destination. Both the secondary and the main destinations correspond to an identifier of an end point to which a connection can be established according to the connection-oriented protocol. Depending on the protocol, and as described later on in the disclosure, the main and the secondary destinations may take different forms. An association of a secondary destination with a main destination is a logical link between both destinations. For example, the gateway comprises a table or tables stored in the memory comprising such associations. Any technique for storing an association between at least one secondary destination and a main destination in a gateway is compatible with the disclosed principles, such as a data base. According to the example illustrated in **Figure 3A**, the main destination corresponds to the server S1 storing a first resource and the secondary destination corresponds to the server S2 storing a second (sub-) resource. According to the example the secondary destination is associated with the main destination because the second resource is often downloaded from the server S2 by a device D1 after the device D1 has downloaded the first resource from the server S1.

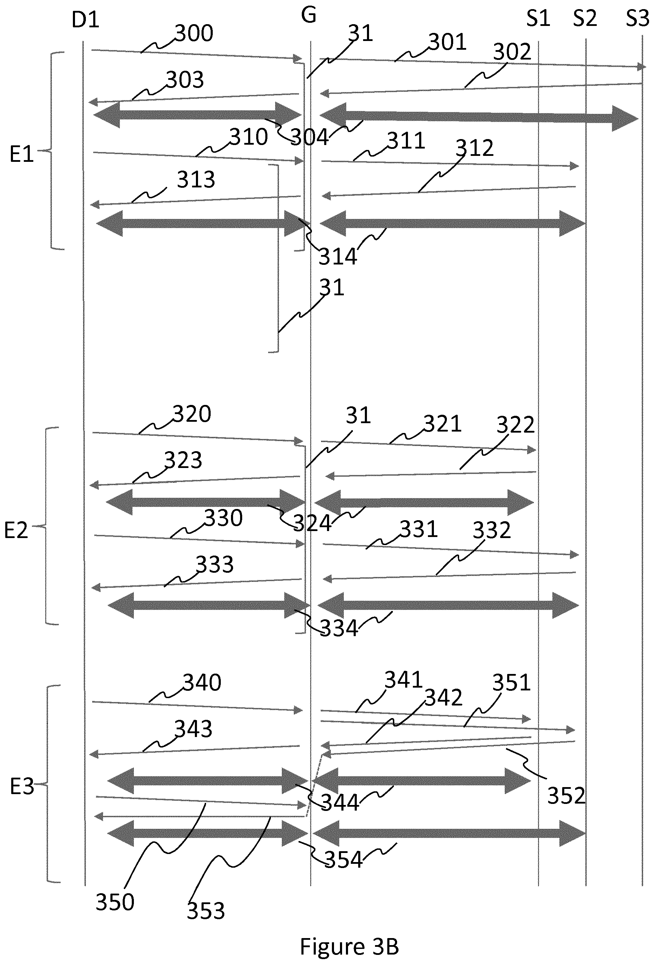

In the step S22 a packet is received by the gateway G from the first network N1. The packet was for example sent by the device D1. Depending on its destination, the received packet is forwarded either to the first N1 or the second N2 network. If the received packet is directed to a destination located in the first network N1, the gateway G forwards the received packet back to the first network N1, otherwise, the gateway G forwards the received packet to the second network N2 (which corresponds to a standard operation mode of a gateway). In addition to this standard operation mode, if the received packet is directed to the second network N2, the gateway checks in the step S23 whether the received packet is a control packet 340 requesting opening a connection according to a connection-oriented protocol. If the received packet is a connection request control packet 340 according to a connection-oriented protocol it is checked in the step S25 whether it is directed to a main destination, i.e. it is checked whether there is any known association in the gateway between the destination to which the connection request control packet is directed and at least one other, secondary, destination. If the connection request control packet 340 is directed to such a main destination, (i.e. with which at least one secondary destination is associated), at least one secondary connection is opened by the gateway G on the second network N2 in the step S27 by generating and sending a secondary connection request control packet 351 directed to the secondary destination S2. The transmission of the secondary connection request control packet 351 is triggered by the reception of a connection request control packet directed to the main destination for which an association with the secondary destination is stored in the gateway. The received connection request control packet 340 directed to the server S1 is forwarded as a forwarded connection request control packet 341 to the second network N2. While Figure 3 illustrates sending the forwarded connection request control packet 341 before sending the secondary connection request control packet 351, the disclosed principles are not limited to that order, and sending the secondary connection request control packet 351 before sending the forwarded connection request control packet 341 is also compatible with the disclosed principles.

The server S1 having received the forwarded connection request control packet 341 from the gateway G will reply by sending back to the gateway a response control packet 342 directed to the device D1, which is received by the gateway G And forwarded to the device D1 on the first network N1 as a forwarded response control packet 343 for opening the main connection on both the first N1 and the second N2 networks. This is illustrated by a data path 354 flowing through the gateway G.

Depending on the connection-oriented protocols, various control packet exchanges may be required to open a connection on a network. In its simplest form a connection-oriented protocol may establish a connection by the transmission of a unique and unacknowledged control packet (not represented in Figure 3A). In such a case, according to the disclosed principles, as the transmission of the unique unacknowledged control packet on the second network N2 has been anticipated by transmission of secondary connection request control packet 351, the secondary connection is open on the second network N2 from the anticipated transmission of the unique unacknowledged control packet. Then, when a subsequent control packet for opening the secondary connection will be received by the gateway from the first network, it will not be forwarded. Only subsequent data packets directed to the secondary destination and received by the gateway from the first network N1 will be forwarded to the second network N2.

Once the secondary connection is open on the second network N2 according to the connection-oriented protocol, subsequent data packets received by the gateway G from the first network N1 and directed to the secondary destination are forwarded by the gateway G to the second network N2 on the opened secondary connection. This is illustrated by a data path 354 flowing through the gateway G. By "subsequent" data packets is meant any data packets received after the secondary connection has been opened. As the secondary connection opening has been anticipated by the sending of the secondary connection request control packet 351, any subsequent data packets related to that secondary connection received from the first network N1 are directly forwarded by the gateway to the second network N2 without having to open the secondary connection, thereby removing the prior-art latency required for re-opening the secondary connection. This results in reduced page load time T2, shorter than the page load time T1 illustrated in Figure 1B. Only subsequent data packets according to the connection-oriented protocol and directed to the secondary destination are forwarded in the already opened secondary connection. Any subsequent control packet directed to the secondary destination, received by the gateway G from the first network after the gateway anticipatory opened the secondary connection, is not forwarded to the second network N2. It is for example simply dropped or discarded.

In an optional variant, for protocols requiring more control packet exchanges (including acknowledges) for opening a connection than a single transmission of an unacknowledged control packet, a response control packet 353 is sent by the gateway G to the first network N1 in response to a subsequent connection request control packet 350 received from the first network N1 for opening the secondary connection, without forwarding the subsequent connection request control packet 350 to the second network N2. The response control packet 353 is generated by the gateway G, without being simply forwarded from the second network N2 to the first network N1. The opening of the secondary connection differs here from the opening of the main connection. During the opening of the main connection, the response control packet 342 generated by the server S1 is simply forwarded by the gateway G to the device D1 when it is received from the server S1. However, as the secondary connection has been anticipatory opened on the second network N2 (but is not yet opened on the first network N1), the response control packet 352 generated by the server S2 is not forwarded to the device D1 at the time it is received by the gateway G. A response control packet 353 for opening the secondary connection on the first network is sent later, as a response to a later connection request control packet 350 reception from the device D1 on the first network N1.

In a first variant when the gateway G receives a secondary response control packet 352 from the second network N2 in response to the anticipated secondary connection request control packet 351 previously sent by the gateway G, the secondary response control packet 352 is simply dropped, and a new secondary response control packet 353 is generated and sent by the gateway G to the first network N1 in response to the subsequent connection request control packet 350 received from the first network N1. Such a variant makes sense in case for example when the fields of the response control packet according to the protocol are fixed, or can be learned, or do not depend from the initiator of the response control packet.

In a second variant, a secondary response control packet 352 received by the gateway from the second network N2 in response to the anticipated secondary connection request control packet 351 previously sent by the gateway G, is saved by the gateway G in a memory for being sent later to the first network N1, when the subsequent connection request control packet 350 will be received by the gateway G from the first network N1, and in response to that subsequent connection request control packet 350.

Depending on the connection-oriented protocol various other control packet exchanges may be required between the device D1 opening the secondary connection and the corresponding endpoint at the server S2 (over both the first network N1 and the second network N2). In such a case the gateway G anticipatory sends any further secondary control packets as required by the protocol to complete the establishment of the secondary connection on the second network N2 and sends additional secondary control response packets to the first network N1, as required by the protocol, in response to further secondary control packets received from the first network N1 (not represented in Figure 3A), according to any of the above variants.

Once the secondary connection is open on the first network N1, and once subsequent data packets related to the secondary connection are received from the first network N1, the subsequent packets related to the secondary connection are forwarded to the second network N2 on the anticipatory opened secondary connection as previously described, therefore saving the latency needed for opening the secondary connection on the second network N2 at that stage.

### Learning the associations

According to a specific and and non-limiting embodiment of the disclosed principles, the associations of a main destination with at least one secondary destination are learned by the gateway G by monitoring the reception of connection request control packets originating from various devices and directed to various destinations. As it will be described below together with Figure 3B into more details, when a first connection request control packet is received from a device after that device has been silent (not sending any packet) over a period of at least a couple of seconds or minutes, this is likely to indicate that the device is starting some networking operation (i.e. opening a new web page). Therefore, the destination of that first connection request control packet may be safely considered as a main destination. Subsequent connection request control packets received from the same device and within a time period of less than a few seconds from the first connection request control packet are likely to be related to subsequent connections, depending from the main connections. Therefore, the destination of any of such subsequent connection request control packets can be safely considered as a secondary destination and being associated with the main destination in a learning phase.

**Figure 3B** illustrates an exemplary packet exchange according to a connection-oriented protocol and according to that specific and non-limiting embodiment. Figure 3B illustrates three successive packet exchange sequences E1, E2 and E3 between a device D1 and a set of servers S1, S2, S3 via the gateway G.

The first exchange sequence E1 illustrates an exchange of packets after the gateway G has initialized and/or does not have any pre-existing association of destination addresses yet. The exchange sequence E1 is similar to the exchange of Figure 1B. The gateway G receives a connection request control packet 300 directed to the server S3 from the first network N1, and forwards it to the server S3 via the second network N2 as a forwarded connection request control packet 301. The server S3 sends back a response control packet 302 directed to the device D1 via the second network N2 which is received and forwarded back by the gateway G to the device D1 via the first network N1 as a forwarded response control packet 303. Since this is the first connection request control packet originating from the device D1 after a period of for example a few seconds, the destination of the first connection request control packet 300 is considered as a main destination by the gateway G, without any associated secondary destination yet. A timer 31, of for example a few seconds, is started for example when the connection request control packet 300 originating from the device D1 and directed to a destination considered as the main destination is received by the gateway G. In another example (not represented) the timer 31 is started when the response control packet 303 originating from the server S3 is forwarded to the device D1 by the gateway G. In another example illustrated in the sequence E1, the timer 31 is reset (and started again) by the gateway G for each connection request control packet 310 received from the same device D1 and directed to a secondary destination. In yet another example (not illustrated) the timer 31 is reset by the gateway G for each data packet sent by the device D1 (and/or received from the server S3) flowing on the main connection through the gateway G. A timer of a few seconds is used as an example described throughout the disclosure. A timer of one or more minutes is equally applicable to the disclosed principles. More generally any timer value that can be used to represent the beginning of a user activity after a user inactivity period is applicable to the disclosed principles.

At a later point in time, but before the expiration of the timer 31, a further connection request control packet 310 is received by the gateway G from the same device D1 (this is detected by the gateway G because both connection request control packets 300 and 310 have the same source network address). As the further connection request control packet 310 is received from the same device D1 as the first connection request control packet 300, and because the the timer 31 (according to any of the above variants) did not yet expire, the destination of the further connection request control packet 310 (in this example the server S2) is considered as a secondary destination and is associated with the main destination (in this example the server S3). The further connection request control packet 310 is also forwarded to the second network N2 as a forwarded connection request control packet 311 (similar to the example depicted in figure 1B). As the association of the main destination with the secondary destination has just been established, when a response control packet 312 is received from the server S2 in response to the forwarded connection request control packet 311, it is forwarded to the device D1 as a forwarded response control packet 313 (similar to the example depicted in figure 1B).

Any further connection request control packet (not illustrated) directed to any other destination than the main destination and received by the gateway G from the same device D1 before the expiration of the timer 31 in any of its variants, will be considered related to the main destination, and this destination is associated with the main destination as an additional secondary destination. The expiration of the timer 31 terminates the process of learning secondary destinations to be associated with the main destination at this stage.

The second exchange sequence E2 illustrates a further association learning scenario after the expiration of timer 31. As depicted in sequence E2, a subsequent connection request control packet 320 directed to the server S1 is received by the gateway G from the same device D1, but after timer 31 expiration. According to this example, the destination of the subsequent connection request control packet 320 (the server S1 in this example) is not yet associated with any secondary destination. Therefore, no secondary connection can be anticipatory opened by the gateway G. Therefore, the gateway G advantageously considers that destination as another main destination for which further secondary destinations can be learned and associated with, similarly to the sequence E1. The packet exchange 320, 321, 322, 323 corresponds to the opening of a connection related to a not yet associated main destination (the server S1 in this example). As a further subsequent connection request control packet 330 is received by the gateway G from the same device D1 as the subsequent connection request control packet 320, before expiration of timer 31, the destination of the further subsequent connection request control packet 330 (in this example the server S2) is considered as a secondary destination to be associated with the main destination (in this example the server S3). The packet exchange 330, 331, 332, 333 corresponds to the opening of a further secondary connection related to a further secondary destination (the server S2 in that example). The further secondary destination (the server S2 in this example) is associated to the other main destination (the server S1 in this example).

The third exchange sequence E3 is the same as the exchange illustrated in Figure 3A and illustrates an exchange of packets between the device D1 and the servers S1 and S2 after an association has been learned between a main destination (towards S1) and a secondary destination (towards S2) as illustrated by the exchange sequence E1. In other words, an association of a secondary destination with a main destination is established in case before receiving the connection request control packet 340 for opening the main connection, a preceding connection request control packet 320 directed to the same destination was received from the first network N1, followed by a subsequent further connection request control packet 330 directed to the secondary destination, the subsequent further connection request control packet 330 being received from a same device D1 as the preceding connection request control packet 320 before a timeout 31. As illustrated in the sequence E2, the preceding connection request control packet 320 was received after a time period during which no other connection request control packet was received from the same device D1. Throughout Figure 3B, data flows 304, 314, 324, 334, 344, 354 flowing over the gateway represent the data packets transmitted over the various connections.

For the sake of clarity, the present principles have been described with an association of a main destination with a secondary destination, but the present principles are equally applicable to a set of such associations. Moreover, the present principles are not limited to associations of a main destination with a single secondary destination. They are also applicable to associations of a main destination with several secondary destinations. For example, in case several subsequent connection request control packets (not illustrated) directed to several different secondary destinations are received from a same device D1 as the preceding connection request control packet 320 targeted to a main destination before the expiration of a timer 31 (i.e. before the learning terminates), the several secondary destinations are associated with the main destination.

In case a main destination is associated with several secondary destinations, several secondary connections respectively directed to the several secondary destinations are anticipatory opened responsive to the reception of a connection request control packet directed to the main destination, by applying the previously described technique to the several secondary destinations.

According to a specific embodiment (not illustrated), for a given main destination, the gateway G continuously learns the associations with secondary destinations as connection request control packets are received from the same device on the first network N1 before the expiration of the timer 31 in any of its variants. The learning is not restricted to the initial connection request control packets targeted to a secondary destination received just after the reception of the first connection request control packet targeted to the main destination (as illustrated in sequence E1). It may for example happen that, after having anticipatory opened a secondary connection, the gateway receives, within a time limited period (corresponding to the timer 31) a connection request control packet directed to a new destination which is not yet associated with the main destination. This may occur for example when the content of a web page is updated on a server with new sub resource. In such a case, the new destination is added to the set of secondary destinations associated with the main destination, for being anticipatory opened at the next reception of a connection request control packet targeted to the main destination.

### Filtering, limiting the associated secondary destinations

According to another specific and and non-limiting embodiment of the disclosed principles, in which a main destination is associated with several secondary destinations, a number of secondary connections targeted to only a subset of the associated secondary destinations (i.e. not all) are anticipatory opened for the main connection. In a variant the number of anticipated secondary connections is constant for a given main destination. In another variant the total number of anticipated secondary connections is based on the current load of the gateway G. For keeping the performance of the gateway G at an acceptable level, only a maximum number of secondary connections are anticipated, and this number is shared among the different main connections. In another variant, wherein the associations are continuously monitored and re-established via learning as previously described, the secondary destinations are weighted in their association with the main destination as a factor or their occurrence in the reception of corresponding connection request control packets. When only a limited number of secondary connections are anticipatory opened, the secondary destinations (to which secondary connections are anticipatory opened) are selected according to their weight in the association. In yet another variant, in case the association of secondary destinations with the main destination is re-established several times (via continuous learning as previously described), secondary connections are anticipatory opened only to the secondary destinations which associations are the most frequently re-established.

### Downloading the associations from a server

According to another specific and and non-limiting embodiment of the disclosed principles, the set of associations of main destinations with secondary destinations are downloaded from a server, e.g., the web server providing the page. According to that embodiment, the set of associations can be predetermined according to any technique and centrally managed. In an optional and advantageous variant, a gateway both downloads a set of associations from a server and learns further associations via continuous learning as previously described. Optionally, as a new association is established though learning by the gateway as previously described according to any embodiment and/or variant, it is transmitted to the server, for example for being downloaded further to other gateways. Such an approach allows distributed learning schemes where some associations learned by a gateway can be made available to other gateways.

### Learning user behaviors

According to another specific and and non-limiting embodiment of the disclosed principles, successive receptions of the connection request control packets from the first network to the main destination are monitored over time and the anticipated opening of the secondary connection is triggered responsive to that monitoring. Monitoring such successive receptions of connection request control packets from the first network to any main destinations allows to automatically learn user behaviours. Such monitoring allows for example to detect that a connection to a specific main destination is opened at regular occurrence (for example at a given time on a daily basis, because a web page is for example usually daily retrieved). As it has been detected that a connection to a main destination is periodically opened, the connection to the main destination and to the associated secondary destinations can be advantageously anticipatory opened on the second network according to any variant and/or embodiment of the disclosed principles a few seconds before the detected occurrence time.

As previously mentioned, the disclosed principles are compatible with any connection oriented protocol. More precisely, and without limitation, the disclosed principles are compatible with the Transport Control Protocol, TCP, the Transport Layer Security, TLS, protocol and the Quick UDP Internet Connections, QUIC protocol, as further detailed hereafter.

### TCP variant

According to a first variant, the connection oriented protocol is the TCP protocol. A TCP destination according to the TCP protocol includes a destination network address of the device on which the TCP stack is running as well as a destination TCP port. The destination network address is an IP address. The TCP destination port is a two-byte number. According to the TCP variant of the disclosed principles a destination (main and secondary) is an IP address and a TCP destination port, which represent the destination logical endpoint of the TCP connection. Optionally, the hostname of the device is used in addition or in place of the IP address.

To open a connection, TCP uses a three-way handshake control packet exchange. A TCP SYN control packet is sent by the client device to the server. The client sets the segment's sequence number to a random value A. In response the server replies with a TCP SYN-ACK control packet. The acknowledgment number is set to one more than the received sequence number i.e. A+1, and the sequence number that the server chooses for the packet is another random number, B. Finally, the client sends a TCP ACK control packet back to the server. The sequence number is set to the received acknowledgement value i.e. A+1, and the acknowledgement number is set to one more than the received sequence number i.e. B+1. According to the disclosed principles and referring to Figures 1B, 3A and 3B, the connection request control packets 100, 110, 300, 310, 320, 330, 340, 350 are TCP SYN control packets. The TCP SYN control packet contains the TCP source port and the sequence number A for that connection. In a first variant, the TCP SYN control packet 100, 110, 300, 310, 320, 330, 340, 350 is forwarded as received without any modification as a forwarded TCP SYN control packet 101, 111, 301, 311, 321, 331, 341, 351. In a second variant, for instance in case the gateway G is running a Network Address Translation (NAT), the TCP SYN control packet is forwarded by translating the source address, the source port, and/or the sequence number. Any value being translated is memorized by the gateway for being translated back while forwarding the response back to the device D1.

Referring to Figure 3A and 3B, and considering a secondary destination (destination IP address and TCP port) is associated with a main destination, the reception of a TCP SYN packet 340 directed to the main destination from the device D1 on the first network N1 by the gateway G triggers the generation by the gateway G of a TCP SYN packet 351 directed to the secondary destination (destination IP address and TCP port, associated with the main destination) on the second network N2. For that purpose, the gateway allocates a number for being the sequence number of the generated TCP SYN packet 351, and memorizes it. The gateway G further completes the three-way handshake with the secondary destination on the second network N2 to complete the anticipatory opening of the secondary connection on the second network N2. During the three-way handshake, the gateway also receives the sequence number B of the TCP SYN-ACK packet and memorizes it. Once the secondary connection is open on the second network N2 (i.e. between the gateway and the secondary destination), it is kept open by responding to keep alive messages as necessary.

When the gateway G receives a TCP-SYN packet 350 from the device D1 on the first network N1 for opening the secondary connection, the gateway G directly responds to the TCP-SYN 350 packet by sending a TCP SYN-ACK packet 353 towards the device D1 without forwarding the TCP-SYN 350 to the secondary destination. In a first variant, the TCP SYN-ACK packet 353 is generated by the gateway G at that moment. In a second variant, the TCP SYN-ACK packet 352 that was received from the secondary destination is kept for being sent at that moment. The gateway may either use the acknowledge number that was received from the server in the TCP SYN-ACK packet 352 or allocate a new value. The gateway G further completes the three-way handshake with the device D1 for completing the opening of the secondary connection on the first network N1 (i.e. between the device D1 and the gateway G). Once the secondary connection is open on the first network N1, any TCP packet (both user data packets and ack packets) received by the gateway on the secondary connection of the first network N1 is forwarded on the secondary connection of the second network N2 that was anticipatory opened. The sequence number and the acknowledge number of the forwarded packets are increased by an offset according to the values that were respectively allocated while opening the secondary connection on the first and the second networks. As previously mentioned, if the gateway G runs a NAT, the appropriate source and destination address and ports are also translated accordingly.

### TLS variant

According to a second variant, the connection oriented protocol is the TLS protocol. TLS frequently runs on top of TCP, so that the disclosed principles can be advantageously applied to anticipate opening of both TCP and TLS connections. A TLS destination according to the TLS protocol includes a TCP destination and a hostname. An association of a main destination with at least one secondary destination corresponds in TLS to an association of a (main TCP destination, main hostname) tuple with at least one (secondary TCP destination, secondary hostname) tuple.

To open a connection, TLS starts by sending a ClientHello message to a server which replies with a ServerHello message comprising a certificate. This first exchange is followed by a set control packets for exchanging keys, certificates, and more generally all the information required by both sides for the exchange of the actual application data by TLS.

According to the disclosed principles and referring to Figures 1B, 3A and 3B, the connection request control packets 100, 110, 300, 310, 320, 330, 340, 350 are a TLS ClientHello control packet. The TLS ClientHello control packet 100, 110, 300, 310, 320, 330, 340, 350 is forwarded as received for example without any modification as a forwarded TLS ClientHello control packet 101, 111, 301, 311, 321, 331, 341, 351. Considering a secondary destination is associated with a main destination, the reception of a TLS ClientHello packet 340 directed to the main destination from the device D1 on the first network N1 by the gateway G triggers the generation by the gateway G of a TLS ClientHello packet 351 directed to the secondary destination (associated with the main destination) on the second network N2. The TLS ClientHello control packet 340, 350 contains the client (device D1) capabilities. In a first variant, the client capabilities are learned from a previous TLS exchange (for example similarly to the way the association was learned from a previous TLS exchange as previously described) and the TLS ClientHello control packet 351 is generated on the second network N2 using the learned capabilities. In a second example, default or most common capabilities are used in the generated ClientHello control packet 351. When the gateway G receives the TLS ServerHello control packet 352, the gateway G memorizes it for sending it back to the device D1 when the device D1 will open the TLS secondary connection on the first network N1.

When the gateway G receives a TLS ClientHello control packet 350 from the device D1 on the first network N1 for opening the secondary connection, the gateway G directly responds to the TLS ClientHello control packet 350 by sending a TLS ServerHello control packet packet 353 towards the device D1 (which was previously received from the second network N2 during the anticipated secondary connection opening and stored) without forwarding the TLS ClientHello 350 to the second network N2. The gateway G further completes the opening of the secondary connection on the first network N1 between the device D1 and the gateway G. Once the secondary connection is open on the first network N1, any TLS packet (both user data packets and ack packets) received by the gateway G on the secondary connection of the first network N1 is forwarded on the secondary connection of the second network N2 that was anticipatory opened.

### QUIC variant

According to a third variant, the connection oriented protocol is the QUIC (Quick UDP Internet Connections) protocol. QUIC is a connection oriented protocol, very similar to the combination of TCP, TLS and HTTP2, but implemented on top of UDP. A QUIC destination according to the QUIC protocol includes a UDP port and a hostname. An association of a main destination with at least one secondary destination corresponds in TLS to an association of a (main UDP destination port, main hostname) tuple with at least one (secondary UDP destination port, secondary hostname) tuple.

Similarly to TLS, QUIC starts a handshake by sending a QUIC Inchoate message which is processed as the TLS ClientHello message in the TLS variant. Similarly to the TLS variant, the response received from the second network N2 to that QUIC Inchoate message is stored by the gateway G for being sent back later on the first network N1 when the device D1 will open the secondary connection on the first network N1. Specifically to QUIC, connection numbers are allocated by the gateway G and subsequent messages are translated according to that allocated connection number.

### Dealing with DNS Load balancing

When DNS load balancing is used, a DNS request will direct a client to the closest or least loaded server, or set of servers, which may vary over time. Consequently, as the servers load vary, the destination host of a secondary connection may change over time. To deal with that problem, the secondary destination (associated with the main destination) comprises both the host name and the IP address, for any of the above variant. Keeping both the IP address and the host name of the secondary destination in the association between the main destination and the secondary destination allows to lock the host name to the first IP address to which the host name has been resolved when opening the secondary connection for the first time. When a name resolution request is received by the gateway G from the first network N1 for retrieving a network address of a hostname, if the hostname is comprised in the secondary destination, the gateway advantageously replies with a name resolution response on the first network N1 by sending the network address of the secondary destination, without forwarding the name resolution request to the second network N2. This allows to bypass any DNS load balancing so that any anticipatory opened secondary connection according to the disclosed principles can be safely used.

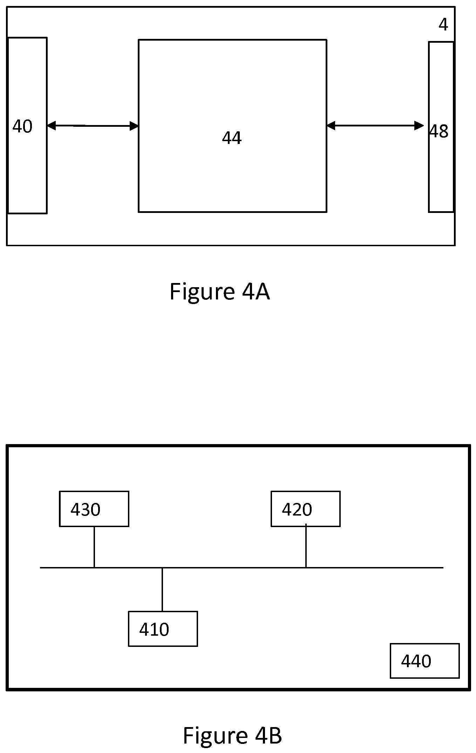

**Figure 4A** illustrates a processing device 4 for forwarding packets between a first network and a second network according to a specific and non-limiting embodiment of the disclosed principles. The processing device 4 comprises a first network interface 40 for connection to a first network and a second network interface 48 for connection to a second network, both the first 40 and the second 48 network interfaces being configured to send and receive data and/or control packets. According to different embodiments of the disclosed principles, the first network interface 40 and the second network interface 48 belong to a set comprising:
- a wireless local area network interface such as Bluetooth, Wi-Fi in any flavour, or any kind of wireless interface of the IEEE 802 family of network interfaces;
- a wired LAN interface such as Ethernet, IEEE 802.3 or any wired interface of the IEEE 802 family of network interfaces;
- a wired bus interface such as USB, FireWire, or any kind of wired bus technology.
- a broadband cellular wireless network interface such a 2G/3G/4G/5G cellular wireless network interface compliant to the 3GPP specification in any of its releases;
- a wide area network interface such a xDSL, FFTx or a WiMAX interface.

More generally, any network interface allowing to send and receive data and/or control packets is compatible with the disclosed principles. The disclosed principles are not limited to processing devices forwarding packets between two network interfaces and any processing device forwarding data packets between at least three network interfaces of any kind is compatible with the disclosed principles.

According to a specific and non-limiting embodiment, the first network interface 40 and the second network interface 48 are coupled to a processing module 44, configured to store an association of a secondary destination with a main destination and to open a secondary connection to the secondary destination according to a communication protocol on the second network, wherein opening the secondary connection is triggered by a reception of a connection request packet from the first network for opening a main connection to the main destination according to the communication protocol. The processing module 44 is further configured to forward subsequent data packets received from the first network and directed to the secondary destination on the opened secondary connection on the second network.

**Figure 4B** represents an exemplary architecture of the processing device 4 according to a specific and non-limiting embodiment of the disclosed principles. The processing device 4 comprises one or more processor(s) 410, which is(are), for example, a CPU, a GPU and/or a DSP (English acronym of Digital Signal Processor), along with internal memory 420 (e.g. RAM, ROM, EPROM). The processing device 4 comprises one or several Input/Output interface(s) 430 adapted to send output information and/or to allow a user to enter commands and/or data (e.g. a keyboard, a mouse, a touchpad, a webcam, a display), and/or to send / receive data over a network interface; and a power source 440 which may be external to the processing device 4.

According to an exemplary and non-limiting embodiment, the processing device 4 further comprises a computer program stored in the memory 420. The computer program comprises instructions which, when executed by the processing device 4, in particular by the processor(s) 410, make the processing device 4 carrying out the processing method described with reference to figure 2. According to a variant, the computer program is stored externally to the processing device 4 on a non-transitory digital data support, e.g. on an external storage medium such as a SD Card, HDD, CD-ROM, DVD, a read-only and/or DVD drive and/or a DVD Read/Write drive, all known in the art. The processing device 4 thus comprises an interface to read the computer program. Further, the processing device 4 could access one or more Universal Serial Bus (USB)-type storage devices (e.g., "memory sticks.") through corresponding USB ports (not shown).

According to exemplary and non-limiting embodiments, the processing device 4 is a device, which belongs to a set comprising:
- an access point, wired or wireless;
- an internet gateway;
- a router;
- a cellular base station according to any cellular network standard;
- a wireless access point;
- a laptop computer;
- a desktop computer;
- a server;
- a networking device.

According to a specific and non-limiting embodiment of the disclosed principles, an apparatus is disclosed. The apparatus comprises:
- a first network interface for connecting to a first network;
- a second network interface for connecting to a second network;
- means for storing an association of a secondary destination with a main destination;
- means for opening a secondary connection to the secondary destination according to a communication protocol on the second network based on the stored association, said opening the secondary connection being triggered by a reception of a connection request packet from the first network for opening a main connection to the main destination according to the communication protocol;
- means for forwarding, on the opened secondary connection on the second network, subsequent data packets received from the first network and directed to the secondary destination.

In a variant, a response packet is sent to the first network in response to a subsequent connection request packet received from the first network for opening the secondary connection, without forwarding the subsequent connection request packet to the second network.

In another variant, the association of the secondary destination with the main destination, is received from a server.

In yet another variant, an association of the secondary destination with the main destination is established in case before receiving the connection request packet for opening the main connection, a preceding connection request packet to the main destination was received from the first network, followed by a subsequent further connection request packet to the secondary destination, the subsequent further connection request packet being received from a same device as the preceding connection request packet before a timeout.

In yet another variant, the preceding connection request packet was received after a time period during which no other connection request packet was received from the same device.

In yet another variant, the association of the secondary destination with the main destination is transmitted to a server.

In yet another variant, several secondary destinations are associated with the main destination, said opening applying to several secondary connections to respectively said several secondary destinations.

In yet another variant, the association of secondary destinations with the main destination is re-established several times, said opening applying only to the secondary connections to the secondary destinations which associations are the most frequently re-established.

In yet another variant, when a name resolution request is received from the first network for retrieving a network address of a hostname, if the hostname is comprised in the secondary destination, sending a name resolution response to the first network comprising the network address of the secondary destination, without forwarding the name resolution request to the second network.

In yet another variant, successive receptions of the connection request packet from the first network to the main destination are monitored over time and said opening the secondary connection is triggered responsive to said monitoring

In yet another variant, the protocol is at least one among the Transport Control Protocol, TCP, the Transport Layer Security, TLS, protocol, the Quick UDP Internet Connections, QUIC protocol

In yet another variant, the apparatus is a gateway.

According to another specific and non-limiting embodiment of the disclosed principles, a method for forwarding packets from a first network to a second network is disclosed. The method comprises:
- opening a secondary connection to a secondary destination according to a communication protocol on the second network, the secondary destination being associated with a main destination, said opening the secondary connection being triggered by a reception of a connection request packet from the first network for opening a main connection to the main destination according to the communication protocol;
- forwarding, on the opened secondary connection on the second network, subsequent data packets received from the first network and directed to the secondary destination.

In another aspect, a computer program product for forwarding packets from a first network to a second network is also disclosed. The computer program product comprises program code instructions executable by a processor for performing the method implemented in any of its variants.

While not explicitly described, the present embodiments may be employed in any combination or sub-combination. For example, the present principles are not limited to the described variants, and any arrangement of variants and embodiments can be used. Moreover, the present principles are not limited to the described connection oriented protocols and any other type of connection oriented protocol is compatible with the disclosed principles. The present principles are not further limited to the described network architectures and networking technologies and are applicable to any other network architectures or network technologies.

Besides, any characteristic, variant or embodiment described for a method is compatible with an apparatus device comprising means for processing the disclosed method, with a device comprising a processor configured to process the disclosed method, with a computer program product comprising program code instructions and with a non-transitory computer-readable storage medium storing program instructions.

## Claims

1. An apparatus (G, 4) comprising:
- a first network interface (40) for connecting to a first network (N1);
- a second network interface (48) for connecting to a second network (N2);
- means for storing an association of a secondary destination with a main destination;
- means (44) for opening a secondary connection to the secondary destination according to a communication protocol on the second network (N2) based on the stored association, said opening the secondary connection being triggered by a reception of a connection request packet (340) from the first network (N1) for opening a main connection to the main destination according to the communication protocol;
- means for forwarding, on the opened secondary connection on the second network, subsequent data packets (354) received from the first network (N1) and directed to the secondary destination.

2. A method for forwarding packets from a first network (N1) to a second network (N2), the method comprising:
- opening (S27) a secondary connection to a secondary destination according to a communication protocol on the second network (N2), the secondary destination being associated with a main destination, said opening the secondary connection being triggered by a reception of a connection request packet (340) from the first network (N1) for opening a main connection to the main destination according to the communication protocol;
- forwarding (S24), on the opened secondary connection on the second network (N2), subsequent data packets (354) received from the first network (N1) and directed to the secondary destination.

3. The apparatus according to claim 1 or the method according to claim 2, wherein a response packet (353) is sent to the first network (N1) in response to a subsequent connection request packet (350) received from the first network (N1) for opening the secondary connection, without forwarding the subsequent connection request packet (350) to the second network (N2).

4. The apparatus according to claim 1 or 3, or the method according to claim 2 or 3, wherein the association of the secondary destination with the main destination, is received from a server.

5. The apparatus according to claim 1 or 3 to 4, or the method according to claim 2 or 3 to 4, wherein an association of the secondary destination with the main destination is established in case before receiving the connection request packet (440) for opening the main connection, a preceding connection request packet (320) to the main destination was received from the first network (N1), followed by a subsequent further connection request packet (330) to the secondary destination, the subsequent further connection request packet (330) being received from a same device (D1) as the preceding connection request packet (320) before a timeout (31).

6. The apparatus according to claim 1 or 3 to 5, or the method according to claim 2 or 3 to 5, wherein the preceding connection request packet was received after a time period during which no other connection request packet was received from the same device.

7. The apparatus or the method according to claim 5 or 6, wherein the association of the secondary destination with the main destination is transmitted to a server.

8. The apparatus or the method according to any of claims 5 to 7, wherein several secondary destinations are associated with the main destination, said opening applying to several secondary connections to respectively said several secondary destinations.

9. The apparatus or the method according to claim 8, wherein the association of secondary destinations with the main destination is re-established several times, said opening applying only to the secondary connections to the secondary destinations which associations are the most frequently re-established.

10. The apparatus according to claim 1 or any of claims 3 to 9, or the method according to claim 2 or 3 to 9, wherein when a name resolution request is received from the first network for retrieving a network address of a hostname, if the hostname is comprised in the secondary destination, sending a name resolution response to the first network comprising the network address of the secondary destination, without forwarding the name resolution request to the second network.

11. The apparatus according to claim 1 or any of claims 3 to 10, or the method according to claim 2 or 3 to 10, wherein successive receptions of the connection request packet from the first network to the main destination are monitored over time and said opening the secondary connection is triggered responsive to said monitoring.

12. The apparatus according to claim 1 or any of claims 3 to 11, or the method according to claim 2 or 3 to 11, wherein the protocol is at least one among the Transport Control Protocol, TCP, the Transport Layer Security, TLS, protocol, the Quick UDP Internet Connections, QUIC protocol.

13. The apparatus according to claim 1 or any of claims 3 to 10, wherein the apparatus is a gateway.

14. A computer program product comprising program code instructions executable by a processor for executing the method according to any of claims 2 to 12.
